(19) Europäisches Patentamt
European Patent Office
Office européen des brevets

(11) Numéro de publication: **0 210 934**
**B1**

(12) **FASCICULE DE BREVET EUROPEEN**

(45) Date de publication du fascicule du brevet: **18.10.89**

(51) Int. Cl.⁴: **C 22 B 59/00**, C 01 F 17/00

(21) Numéro de dépôt: **86420167.8**

(22) Date de dépôt: **25.06.86**

(54) **Procédé de séparation de terres rares et de l'uranium d'un concentré de tétrafluorure d'uranium et de leur valorisation.**

(30) Priorité: **27.06.85 FR 8510374**

(43) Date de publication de la demande:
**04.02.87 Bulletin 87/6**

(45) Mention de la délivrance du brevet:
**18.10.89 Bulletin 89/42**

(84) Etats contractants désignés:
**BE FR NL SE**

(56) Documents cités:
**FR-A- 845 666**
**US-A- 2 815 264**

(73) Titulaire: **URANIUM PECHINEY, Tour Manhattan, La Défense 2, 6, place de l'Iris,, F-92400 Courbevoie (FR)**

(72) Inventeur: **Floréancig, Antoine, Chemin du Clos Chipier, F-69230 Saint-Genis-Laval (FR)**
Inventeur: **Martinez, Bernard, 6 rue Pierre Sire, F-11100 Narbonne (FR)**

(74) Mandataire: **Vanlaer, Marcel et al, PECHINEY 28, rue de Bonnel, F-69433 Lyon Cédex 3 (FR)**

EP 0 210 934 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention est rélative à un procédé de séparation des terres rares d'un concentré d'$UF_4$ et de leur valorisation.

L'homme de l'art sait que l'on peut récupérer de l'uranium à partir de l'acide phosphorique obtenu par attaque sulfurique de phosphates naturels.

Cette récupération consiste à traiter l'acide par un solvant organique non miscible à l'eau et qui présente une forte affinité pour l'uranium tel que par exemple l'acide octylpyrophosphorique puis, à mettre en contact ledit solvant avec de l'acide fluorhydrique pour précipiter du tétrafluorure d'uranium $UF_4$, qui sera par la suite converti en $UF_6$ ou en uranium métal.

Toutefois, l'acide phosphorique contient des impuretés, notamment des terres rares, et également du thorium et de l'yttrium assimilé à une terre rare, et ces éléments accompagnent généralement l'uranium lors de son traitement par solvant de sorte qu'on les retrouve dans l'$UF_4$. Or, les exigences de l'industrie nucléaire en matière de pureté sont telles qu'il s'avère indispensable de procéder à une séparation de ces terres rares.

Certes, le problème de la purification de l'$UF_4$ n'est pas nouveau et il a déjà trouvé certaines solutions. C'est ainsi, par exemple, que dans le brevet français 2 429 746, on enseigne un procédé dans lequel l'$UF_4$ est dissous dans un acide en présence d'un agent complexant tel que le sulfate d'aluminium pour donner une solution aqueuse d'uranium, laquelle après filtration est traitée avec du peroxyde d'hydrogène pour donner un peroxyde hydraté d'uranium purifié.

Cependant, la purification recherchée vise à répondre aux demandes de certaines raffineurs américains de «yellow cake» à savoir moins de 0,15% de fluorure, 1% de fer, 1% de calcium, 0,5% de magnésium en poids et par rapport à l'uranium contenu.

Il n'est donc nullement question de la purification en terres rares et d'ailleurs dans un tel procédé, ces éléments se retrouveraient tous, sauf le thorium, en partie dans le peroxyde, l'autre partie passant sous une forme diluée dans la solution de fluorure d'aluminium et étant par suite difficilement valorisable.

D'autre part, la dissolution de l'$UF_4$ dans un acide qui est le plus souvent de l'acide nitrique conduit à la formation de solutions fluonitriques qui sont très corrosives et risquent d'endommager fortement les installations dans lesquelles elles sont véhiculées à moins de précautions particulières.

Par ailleurs, étant donné l'intérêt présenté par certaines terres rares, une technique permettant de les séparer de l'uranium sous une forme directement valorisable serait sans doute très séduisante pour l'économie du procédé.

C'est pourquoi la demanderesse a cherché et trouvé un procédé ayant pour but de séparer des terres rares (y compris l'yttrium) de l'uranium contenus dans l'$UF_4$ et dans lequel on peut à la fois:

— se débarrasser dès le premier stade des fluorures et donc réduire les problèmes de corrosion,

— récupérer les terres rares et l'yttrium sous une forme valorisable et,

— obtenir une solution d'uranium dont la pureté est suffisante pour conduire à des produits répondant aux exigences des raffineurs notamment du point de vue teneur en fluorures,

Ce procédé est caractérisé en ce qu'il comporte les étapes suivantes:

— attaquer l'$UF_4$ avec de la potasse et séparer les hydroxydes d'uranium et de terres rares solides de la suspension ainsi obtenue,

— reprendre les hydroxydes avec de l'acide nitrique et séparer les insolubles constitués par l'hydroxyde de thorium et une partie des terres rares ainsi vaélorisées,

— purifier la solution de nitrates au moyen d'un solvant organique de manière à en extraire le nitrate d'uranyle et à laisser le solde des terres rares dans la phase aqueuse,

— ajouter une base à la phase aqueuse pour précipiter le solde des terres rares sous forme d'hydroxydes valorisables.

L'invention consiste donc d'abord à attaquer l'$UF_4$ impur avec de la potasse de manière à réaliser la réaction suivante:

$$UF_4 + 4\,KOH \rightarrow 4\,KF + U\,(OH)_4$$

La potasse utilisée est sous forme d'une lessive à 50% en poids telle qu'on la trouve dans le commerce ou obtenue par dissolution des pastilles.

La quantité de potasse utilisée est comprise entre 1 et 3 fois la quantité stoechiométrique correspondant à la formation d'$U(OH)_4$, soit environ 0,95 à 2,85 kg de KOH/kg et dépend de la teneur en terres rares et en thorium de l'$UF_4$ mis en œuvre.

La réaction s'effectue de préférence entre 70 et 110°C, sous agitation et pendant une durée suffisante pour assurer une décomposition complète de l'$UF_4$. Généralement, ce résultat est obtenu en moins de 4 heures.

La suspension résultant de cette réaction est alors filtrée pour donner une solution de fluorure de potassium pratiquement exempte d'uranium et un précipité d'hydroxyde de $U(OH)_4$ contenant les terres rares que l'on lave sur filtre avec une quantité importante d'eau.

Puis le précipité est repris par une solution d'acide nitrique technique, à 53% en poids de préférence, de manière à avoir une acidité libre supérieure à 0,05 N sans pourtant atteindre des valeurs trop élevées qui entraîneraient une consommation d'acide superflue. L'opération est menée entre 40 et 100°C et de préférence entre 70 et 90°C pendant 1 à 2 heures. Dans ces conditions, l'uranium est solubilisé en totalité suivant la réaction:

$$3\,U(OH)_4 + 8\,HNO_3 \rightarrow 3\,UO_2\,(NO_3)_2 + 2\,NO + 10\,H_2O$$

alors que le thorium reste pratiquement inattaqué. Quant aux terres rares, leur solubilisation est partielle et décroît du cérium à l'ytterbium et à l'yttrium.

On peut donc à ce stade récupérer une partie des terres rares par séparation des insolubles au moyen d'une opération de filtration par exemple.

La solution contenant le nitrate d'uranyle et le

solde des terres rares est alors purifiée par extraction liquide-liquide au moyen d'un solvant organique tel que le tributylphosphate par exemple de manière à récupérer, d'une part, une solution organique de nitrate d'uranyle purifiée, d'autre part, une solution aqueuse renfermant les terres rares.

Il suffit d'ajouter une base, telle que l'ammoniaque, la soude, la potasse ou la chaux par exemple, à ladite solution aqueuse et en quantité suffisante pour précipiter les terres rares sous forme d'hydroxydes qu'on peut regrouper avec les insolubles de la reprise nitrique.

Quant à la solution de nitrate d'uranyle, elle peut reprendre le circuit normal du cycle de l'uranium pour être transformée par exemple en $UF_4$ pur avant de conduire à l'$UF_6$ ou à l'uranium de qualité nucléaire.

L'invention sera mieux comprise à l'aide de la figure 1 qui représente les différentes étapes du procédé selon l'invention.

On y voit un réacteur A dans lequel s'effectue l'attaque du fluorure d'uranium impur $S_1$ par une lessive de potasse $L_1$. La suspension $L_2$ obtenue est séparée dans le filtre B en une solution de fluorure de potassium $L_3$ et un précipité $S_2$ d'hydroxyde d'uranium accompagné de terres rares. Ce précipité est repris dans un réacteur C par une solution d'acide nitrique $L_4$ pour former une suspension $L_5$ dont les phases sont séparées dans un filtre D pour donner un précipité $S_3$ contenant la quasi-totalité du thorium et une portion de terres rares et une solution $L_6$ de nitrate d'uranyle contenant le solde des terres rares. Cette solution est purifiée par extraction liquide-liquide au moyen du solvant $L_7$ dans une batterie E de mélangeurs-décanteurs d'extraction et réextraction de laquelle on sort une solution de nitrate d'uranyle $L_8$ de pureté convenable pour être réinjecté dans le cycle de l'uranium et une solution aqueuse $L_9$ de laquelle on précipite dans le réacteur F au moyen d'une base $L_{10}$ les hydroxydes de terres rares qui sont séparés au moyen du filtre G de la suspension $L_{11}$ pour donner une solution aqueuse qui est rejetée et un concentré $S_4$ qui peut être utilisé directement à la fabrication des terres rares.

L'invention peut être illustrée à l'aide des exemples d'application suivants qui ont mis en œuvre un $UF_4$ riche en thorium et en terres rares provenant de la récupération de l'uranium d'un acide phosphorique au moyen de solvant et ayant pour composition en poids pour-cent:

U: 44,5 - Y 4,5 - Th 5,8 - Yb 1,1 - Ce 0,95 - Fe 0,1 - Na 5,6 - $F_{30}$ - divers 7,45.

*Example 1*

Cet $UF_4$ a été soumis au procédé selon l'invention avec des quantités variables de réactifs KOH et $NO_3H$ et dans des conditions de température et de durée différentes.

En fonction de ces paramètres, on a établi les rendements de solubilisation de l'$UF_4$ et des terres rares dans la potasse et dans l'acide nitrique. Les résultats figurent dans le Tableau I suivant:

| Essais n° | | | 1 | 2 | 3 | 4 |
|---|---|---|---|---|---|---|
| Trait. | KOH kg/kg U | | 3,0 | 2,19 | 1,216 | 2,19 |
| | Température °C | | 105 | 90 | 90 | 70 |
| | Durée h | | 4 | 2 | 4 | 4 |
| KOH | Rt solubilisation % | F | 83 | 81 | 70 | 76 |
| | | U | 0 | 0 | 0 | 0 |
| | | Y.Th | | | | |
| | | Ce, Yb | 0 | 0 | 0 | 0 |

| | Essais | | 1A | 1B | 2A | 2B | 3A | 3B | 4A | 4B |
|---|---|---|---|---|---|---|---|---|---|---|
| Trait. HNO₃ | $HNO_3$/kg U | | 3,0 | 1,15 | 3,0 | 1,05 | 1,05 | 1,05 | 1,8 | 1,15 |
| | Température °C | | 90 | 0 | 90 | 90 | 90 | 40 | 90 | 90 |
| | Durée h | | | | | | | | | |
| | Rt solubililisation % | U | 100 | 100 | 99,9 | 99,95 | 99,4 | 99,5 | 99,95 | 99,95 |
| | | F* | 92,5 | 91,1 | 88,3 | 86,2 | 76,7 | 77,9 | 84,8 | 83,5 |
| | | Ce | 99,5 | 98,5 | 97,1 | 95,5 | 83,4 | 85,6 | 97,1 | 96,6 |
| | | Th | 6,0 | 5,5 | 5,5 | 3,9 | 2,4 | 4,5 | 5,4 | 4,8 |
| | | Yb | 94,5 | 90,0 | 89,7 | 73,0 | 26,5 | 29,0 | 83,6 | 80,1 |
| | | Y | 90,5 | 85,0 | 74,9 | 44,7 | 9,2 | 13,0 | 64,6 | 54,4 |
| | Solution $UO_2(NO_3)_2$ | Ug/l | 230 | 244 | 234 | 265 | 247 | 262 | 273 | 255 |
| | | H + g/l | 5,8 | 0,25 | 5,9 | 0,05 | 0,10 | 0,08 | 1,9 | 0,3 |

* F total solubilisé par le double traitement.

Ces différents essais montrent que le traitement préalable de l'$UF_4$ impur par la potasse permet de mettre l'uranium sous une forme facilement solubilisable par l'acide nitrique et d'éliminer la majeure partie du fluor contenu.

Selon les conditions opératoires, on peut si l'on désire valoriser les autres éléments contenus dont le cerium et l'ytterbium qui peuvent être utilisés comme tracteur des terres rares, accroître la solubilisation des autres éléments. Dans tous les cas, le thorium est très peu solubilisé et peut être éliminé.

*Exemple 2*

22,5 kg de $UF_4$ impur, soit 10 kg d'uranium ont été traités à 90°C pendant 4 heures par 28,2 kg d'une solution de potasse à 50% dans le réacteur A.

Après filtration et lavage, on a obtenu d'une part une solution $L_3$ de fluorure de potassium, exempt d'uranium, cérium, thorium, ytterbium, yttrium contenant 5,35 kg de fluor sur les 6,75 kg contenus dans l'$UF_4$ initial, d'autre part, un précipité vert-noir d'hydroxyde d'uranium $S_2$ contenant tout l'uranium initial ainsi que tous les éléments insolubles, en milieu basique comme Ce, Th, Yb, Y. Ce précipité à été traité en C par 18,9 kg de $HNO_3$ technique à 53% pendant 2 heures à 90°C. Après filtration et lavage, on a obtenu une solution $L_6$ de nitrate d'uranyle impure contenant 248 g/l d'uranium et 6,1 g/l seulement d'ions fluor et 10,35 kg d'un insoluble humide $S_3$ ne contenant que 25 g d'uranium.

La solution $L_6$ de nitrate d'uranyle impur a été traitée à contre-courant en E par une solution de tributylphosphate dans du dodécane pour en extraire l'uranium, puis de cette solution organique l'uranium a été réextrait par de l'eau pour obtenir une solution aqueuse pure de nitrare d'uranyle.

Le raffinat d'extraction $L_9$ a été neutralisé par de la soude et on a obtenu après filtration et séchage un concentré $S_4$ riche en thorium et terres rares.

On donne dans le tableau 2 la répartition des différents éléments uranium, fluor, terres rares, au cours des différentes étapes du procédé.

| Rep. fig. | S1 | L3 | S2 | S3 | L6 | L8 | S4 |
|---|---|---|---|---|---|---|---|
| Produit | UF4 impur | solution KF | insoluble KOH | insoluble $HNO_3$ | solution impure $UO_2(NO_3)_2$ | solution pure $UO_2(NO_3)_2$ | précip. à Na OH |
| Poids | | | | | | | |
| sec. kg | 22,5 | | 20,50 | 3,83 | | | 1,65 |
| hum. kg | | | 27,30 | 10,35 | | | |
| Elém. | | | | | | | |
| U kg | 10,000 | <0,001 | 10,000 | 0,025 | 9,975 | 9,970 | 0,05 |
| F kg | 6,750 | 5,350 | 1,400 | 1,050 | 0,350 | | |
| Ce kg | 0,217 | 0,001 | 0,216 | 0,010 | 0,206 | <0,001 | 0,205 |
| Th kg | 1,310 | <0,001 | 1,310 | 1,240 | 0,070 | <0,001 | 0,070 |
| Yb kg | 0,250 | <0,001 | 0,250 | 0,046 | 0,204 | <0,001 | 0,204 |
| Y kg | 1,010 | <0;001 | 1,010 | 0,530 | 0,480 | <0,001 | 0,480 |

Cet exemple montre que l'uranium est récupéré sous forme d'une solution très pure de nitrate d'uranyle alors que la majorité du thorium est éliminé sous forme d'insoluble en milieu $HNO_3$. Les autres éléments comme Ce, Y, et terres rares sont valorisables sous forme d'un concentré riche en ces éléments soit au niveau des insolubles de la reprise nitrique, soit après ajout de soude.

*Exemple 3*

Dans cet example, on a mis en œuvre le même $UF_4$ de départ, mais avec des quantités plus importantes de KOH et $HNO_3$ que dans l'exemple précédent.

On a traité 22,5 kg d'$UF_4$ impur à 90°C pendant 2 heures par 55 kg d'une solution de potasse à 50% dans le réacteur A. Après filtration et lavage, il a été obtenu 26,7 kg d'un précipité vert-noir $S_2$ d'hydroxyde d'uranium contenant tout l'uranium initial ainsi que tous les éléments insolubles en milieu basique de l'$UF_4$ de départ comme Ce, Th, Yb, Y, Fe ...

Ce précipité a été ensuite traité en C par 59 kg de $HNO_3$ à 53%. Après filtration et lavage, il a été obtenu une solution impure de nitrate d'uranyle contenant 232 g/l d'uranium qui a été traité en E à contre-courant par une solution de tributylphosphate à 30% dans du dodécane technique. Après réextraction à l'eau du solvant chargé, il a été obtenu une solution pure de nitrate d'uranyle et un raffinat d'extraction contenant les autres éléments. Ce raffinat d'extraction a été traité par de l'ammoniaque pour précipiter les éléments contenus Y, Ce, et terres rares sous une forme valorisable.

Le bilan matière figurant dans le tableau 3 donne la répartition de U, Y, Th, Ce, Yb aux différentes étapes du procédé.

| Rep. fig. | S1 | L3 | S2 | S3 | L6 | L8 | S4 |
|---|---|---|---|---|---|---|---|
| Produit | UF4 impur | solution KF | insoluble à KOH | insoluble à $HNO_3$ | solution impure $UO_2(NO_3)_2$ | solution pure $UO_2(NO_3)_2$ | précip. à $NH_4OH$ |
| Poids | | | | | | | |
| sec. kg | | | | 2,020 | | | 2,060 |
| hum. kg | | | 26,700 | 6,540 | | | |
| Eléments | | | | | | | |
| U kg | 10,000 | <0,001 | 10,000 | 0,004 | 9,996 | 9,995 | 0,01 |
| F kg | 6,750 | 5,85 | 0,900 | 0,510 | 0,490 | <0,003 | — |
| Ce kg | 0,217 | 0,001 | 0,216 | 0,002 | 0,214 | <0,001 | 0,214 |
| Th kg | 1,310 | <0,001 | 1,316 | 1,235 | 0,075 | <0,001 | 0,075 |
| Yb kg | 0,250 | <0,001 | 0,250 | 0,020 | 0,230 | <0,001 | 0,230 |
| Y kg | 1,010 | <0,001 | 1,010 | 0,120 | 0,890 | <0,001 | 0,890 |

Ce tableau montre que l'uranium contenu dans l'$UF_4$ impur est valorisé sous forme d'une solution très pure de nitrate d'uranyle. L'emploi de quantités plus importantes de réactif KOH et $HNO_3$ permet d'accroître la proportion de Y, Yb, Ce valorisables, le thorium étant éliminé en majeure partie dans l'insoluble obtenu après reprise à l'acide nitrique.

**Revendications**

1. Procédé de séparation des terres rares (y compris l'yttrium) et de l'uranium d'un concentré d'$UF_4$ et de leur valorisation, caractérisé en ce qu'il comporte les étapes suivantes:
— attaquer l'$UF_4$ avec de la potasse et séparer les hydroxydes d'uranium et de terres rares solides de la suspension ainsi obtenue,
— reprendre les hydroxydes avec de l'acide nitrique et séparer les insolubles constitués par le thorium et une partie des terres rares ainsi valorisées,
— purifier la solution de nitrates au moyen d'un solvant organique de manière à en extraire le nitrate d'uranyle et à laisser le solde des terres rares dans la phase aqueuse,
— ajouter une base à la phase aqueuse pour précipiter le solde des terres rares sous forme d'hydroxydes valorisables.

2. Procédé selon la revendication 1, caractérisé en ce que l'attaque du concentré d'$UF_4$ est réalisée avec une quantité de KOH comprise entre 1 et 3 fois la quantité stoechiométrique correspondant à la formation d'$U(OH)_4$.

3. Procédé selon la revendication 1, caractérisé en ce que l'attaque du concentré d'$UF_4$ par la potasse s'effectue entre 70 et 110°C.

4. Procédé selon la revendication 1, caractérisé en ce que la reprise nitrique s'effectue de manière à garder une acidité libre supérieure à 0,05 N.

5. Procédé selon la revendication 1, caractérisé en ce que le solvant organique est le tributylphosphate.

6. Procédé selon la revendication 1, caractérisé en ce que le base ajoutée est choisie parmi l'ammoniaque, la soude, la potasse et la chaux.

**Patentansprüche**

1. Verfahren zur Abtrennung und Verwertung Seltener Erden einschließlich des Yttriums und von Uran aus einem $UF_4$-Konzentrat, dadurch gekennzeichnet, daß es die folgenden Schritte aufweist:
— Angriff des $UF_4$ mit Kaliumhydroxid und Trennung der festen Hydroxide des Urans und der Seltenen Erden von der so erhaltenen Suspension,
— Wiederaufnahme der Hydroxide mit Salpetersäure und Abtrennung der aus Thorium und einem Teil der so verwertbar gemachten Seltenen Erden bestehenden unlöslichen Bestandteile,
— Reinigung der Lösung von Nitraten mit Hilfe eines organischen Lösungsmittels derart, daß daraus das Uranylnitrat extrahiert wird und der Rest der Seltenen Erden in der wässerigen Phase gelassen wird,
— Zusatz einer Base zur wässerigen Phase zwecks Ausfällen des Rests der Seltenen Erden in Form verwertbarer Hydroxide.

2. Verfahren nach dem Anspruch 1, dadurch gekennzeichnet, daß der Angriff des $UF_4$-Konzentrats mit einer KOH-Menge durchgeführt wird, die im Bereich vom 1- bis 3fachen der der Bildung von $U(OH)_4$ entsprechenden stöchiometrischen Menge liegt.

3. Verfahren nach dem Anspruch 1, dadurch gekennzeichnet, daß der Angriff des $UF_4$-Konzentrats durch das Kaliumhydroxid zwischen 70 und 110°C erfolgt.

4. Verfahren nach dem Anspruch 1, dadurch gekennzeichnet, daß die Salpetersäure-Wiederaufnahme derart erfolgt, daß eine freie Acidität über 0,05 N beibehalten wird.

5. Verfahren nach dem Anspruch 1, dadurch gekennzeichnet, daß das organische Lösungsmittel Tributylphosphat ist.

6. Verfahren nach dem Anspruch 1, dadurch gekennzeichnet, daß die zugesetzte Base unter Ammoniak, Natriumhydroxid, Kaliumhydroxid und Calciumhydroxid, gewählt wird.

## Claims

1. A process for separation of rare earths (yttrium included) and uranium of a $UF_4$ concentrate and for putting them into usful form, characterised in that it comprises the following steps:

— attacking the $UF_4$ with potassium hydroxide and separating the solid hydroxides of uranium and rare earths from the resulting suspension,

— dissolving the hydroxides with nitric acid and separating the insoluble matter formed by thorium and a part of the rare earths which are thus put into usable form,

— purifying the solution of nitrates by means of an organic solvent so as to extract the uranyl nitrate therefrom and to leave the remaining rare earths in the aqueous phase, and

— adding a base to the aqueous phase to precipitate the balance of the rare earths in the form of usable hydroxides.

2. A process according to claim 1 characterised in that the $UF_4$ concentrate attack operation is carried out with an amount of KOH which is between 1 and 3 times the stoichiometric amount corresponding to the formation of $U(OH)_4$.

3. A process according to claim 1 characterised in that the $UF_4$ concentrate attack operation using potassium hydroxide is carried out at between 70 and 110°C.

4. A process according to claim 1 characterised in that the nitric dissolution step is carried out in such a way as to keep a level of free acidity of higher than 0.05 N.

5. A process according to claim 1 characterised in that the organic solvent is tributylphosphate.

6. A process according to claim 1 characterised in that the added base is selected among ammonia, sodium hydroxide, potassium hydroxide and lime.

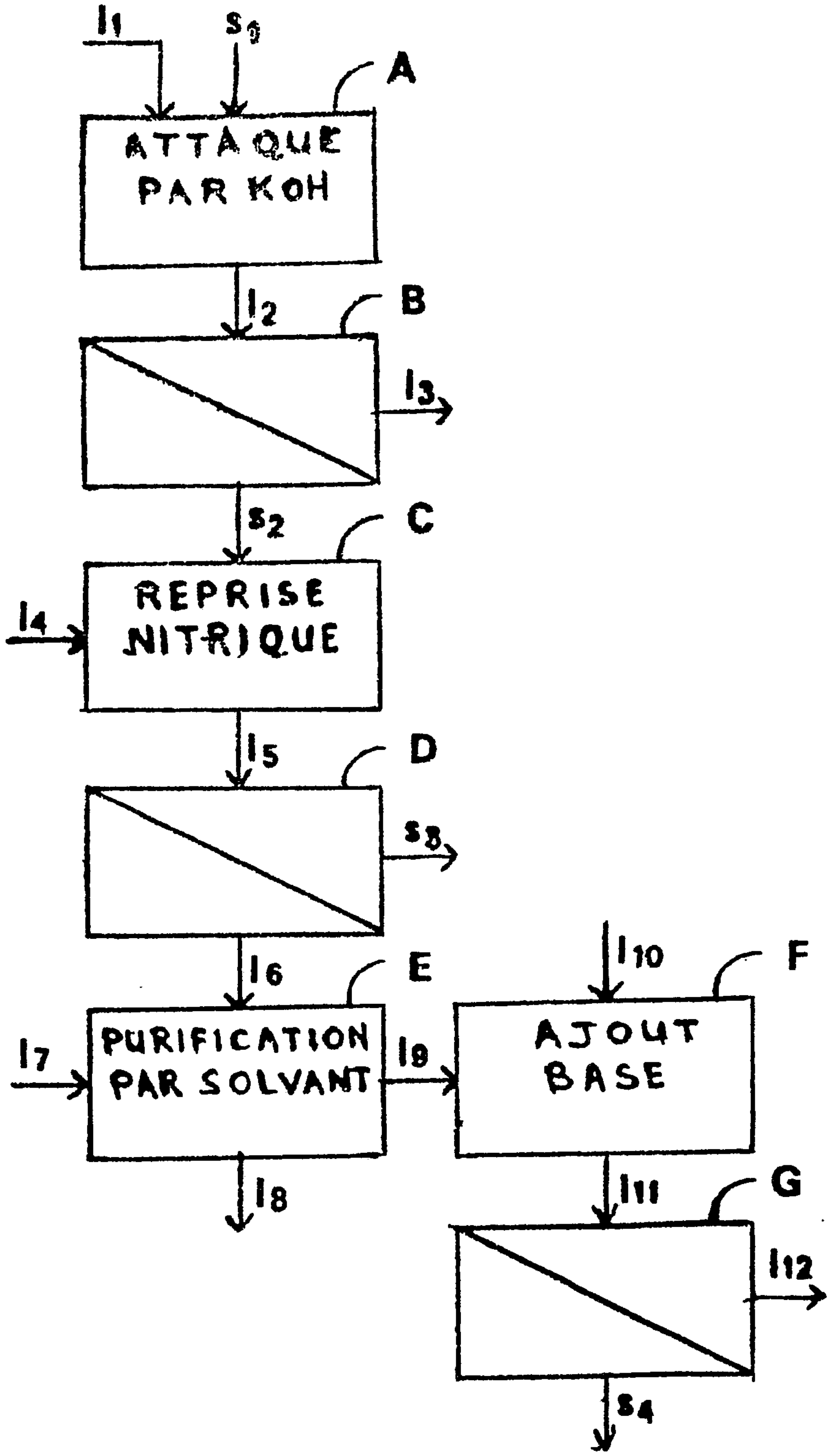
l1
s1
A
ATTAQUE PAR KOH
l2
B
l3
s2
C
REPRISE NITRIQUE
l4
l5
D
s3
l6
E
PURIFICATION PAR SOLVANT
l7
l9
l10
F
AJOUT BASE
l8
l11
G
l12
s4

FIG.1